# EUROPEAN PATENT SPECIFICATION

(11) **EP 2 296 205 B1**
(45) Date of publication and mention of the grant of the patent: **02.12.2015**
(21) Application number: 10251581.4
(22) Date of filing: 10.09.2010
(51) Int. Cl.: H01M 2/02, H01M 2/04, H01M 2/10, H01M 2/20, H01M 2/22, H01M 2/26, H01M 2/30, H01M 10/04

(54) **Rechargeable battery**
Wiederaufladbare Batterie
Batterie rechargeable

(30) Priority: 10.09.2009 US 241288 P; 27.08.2010 US 870595
(43) Date of publication of application: 16.03.2011
(73) Proprietor: Samsung SDI Co., Ltd., Yongin-si, Gyeonggi-do (KR)
(72) Inventor: Lee, Myung-Ro, Yongin-si Gyeonggi-do (KR)
(74) Representative: Mounteney, Simon James

(56) References cited:
- EP-A1- 2 031 674
- EP-A1- 2 093 820
- WO-A2-2009/011539
- JP-A- 2000 311 701
- US-A1- 2004 197 642
- US-A1- 2006 269 836
- US-A1- 2008 206 628
- US-A1- 2008 286 640

## Description

### BACKGROUND

### 1. Field

This invention relates to a rechargeable battery. More particularly, this invention relates to a rechargeable battery having high-capacity.

### 2. Description of the Related Art

A rechargeable battery can be recharged and discharged, unlike a primary battery that cannot be recharged.

In rechargeable batteries having the same capacity, it is beneficial to include one large-sized cylinder battery compared to a plurality of small-sized cylinder batteries which are connected each other, because this can decrease the number of parts connecting cells or circuit devices. However, a large-sized cylindrical battery can cause several problems. For example, when the electrode assembly is spiral-wound in a jelly roll shape in order to provide a high-capacity rechargeable battery, it requires winding the same with a greater number of revolutions than in the case of a low-capacity rechargeable battery. As the number of spiral-windings is increased, the width difference between positive electrode and negative electrode is increased to provide a safe cylindrical battery. However, the capacity of rechargeable battery is correspondingly decreased by increasing the width difference between the positive electrode and negative electrode.

In addition, as a large-sized cylindrical battery has a high-capacity electrode assembly, it may have a relatively high tendency to explode, leading to a reduction in safety.

US 2008/0206628 and JP 2000-311701 relate to lithium secondary batteries with a plurality of electrode wound bodies.

US 2004/197642, US 2008 10286640, EP 2031674 and WO 2009/011539 relate to batteries with a plurality of battery cells.

The above information disclosed in this Background section is only for enhancement of understanding of the background of the described technology and therefore it may contain information that does not form the prior art that is already known in this country to a person of ordinary skill in the art.

### SUMMARY

The present invention sets out to provide a rechargeable battery that overcomes the safety problems associated with high-capacity electrode assemblies, that has a relatively low number of parts connecting cells and circuit devices, and that prevents the cell swelling.

Accordingly, the invention provides a rechargeable battery as set out in claim 1. Preferred features of the invention are set out in Claims 2 to 8. The invention therefore enables the provision of a high-capacity rechargeable battery having a unit cell by accommodating a plurality of low-capacity cylinder electrode assemblies in one can and coupling the same in parallel to minimize the width difference between the positive electrode and negative electrode. In an embodiment of the invention it is also possible to decrease the number of circuit devices and parts connecting the rechargeable batteries from the outside, to ensure the safety of electrode assemblies even though the rechargeable battery is high-capacity, and to prevent the cell swelling generated in a conventional prismatic rechargeable battery.

### BRIEF DESCRIPTION OF THE DRAWINGS

FIG. 1 is a perspective view of a rechargeable battery according to a first embodiment of the invention.
FIG. 2 is an exploded perspective view of FIG. 1.
FIG. 3 is an exploded perspective view of an electrode assembly.
FIG. 4A is a cross-sectional view taken along the line IV-IV of FIG. 1, and FIG. 4B is a cross-sectional view of a rechargeable battery according to a modification of the first embodiment.
FIG. 5 is a cross-sectional view taken along the line V-V of FIG. 1.
FIG. 6 is a cross-sectional view of a rechargeable battery according to another modification of the first embodiment.
FIG. 7 is a cross-sectional view of a rechargeable battery according to a second embodiment of the invention.
FIG. 8 is a flow chart showing a first manufacturing process according to the invention.
FIG. 9 is a flow chart showing a second manufacturing process according to the invention.

### DETAILED DESCRIPTION

The present invention will be described more fully hereinafter with reference to the accompanying drawings, in which embodiments of the invention are shown.

As those skilled in the art would realize, the described embodiments may be modified in various different ways, all without departing from the scope of the present invention.

The drawings and description are to be regarded as illustrative in nature and not restrictive. Like reference numerals designate like elements throughout the specification.

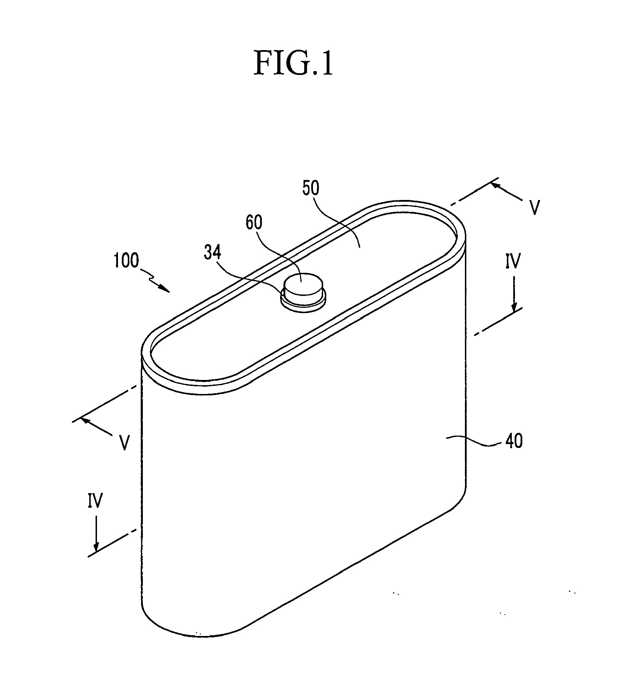

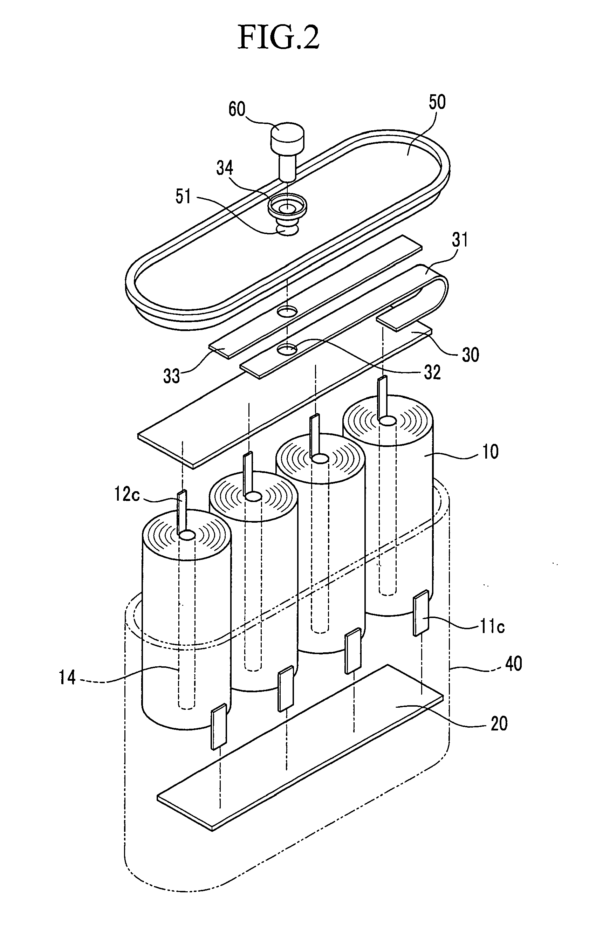

FIG. 1 is a perspective view of a rechargeable battery according to a first embodiment of the invention, and FIG. 2 is an exploded perspective view of FIG. 1.

Referring to FIG. 1 and FIG. 2, the rechargeable battery 100 according to this embodiment includes a plurality of electrode assemblies 10, a first current collecting plate 20 (hereinafter, referred as "lower current collecting plate"), a second current collecting plate 30 (hereinafter, referred as "upper current collecting plate"), a can 40, a cap plate 50, and an electrode terminal 60.

The rechargeable battery 100 is formed by housing a plurality of electrode assemblies 10 in the can 40.

The rechargeable battery 100 makes it possible to accomplish a high-capacity, to prevent explosion, and to provide safety by connecting a plurality of low-capacity electrode assemblies 10 in parallel.

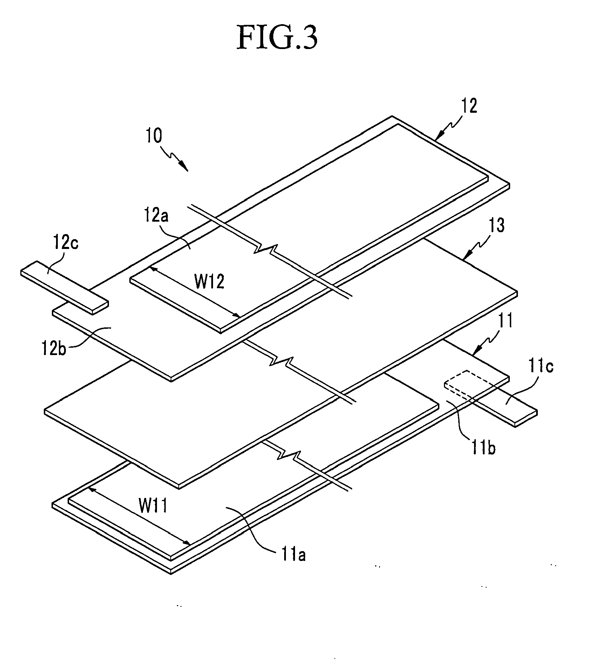

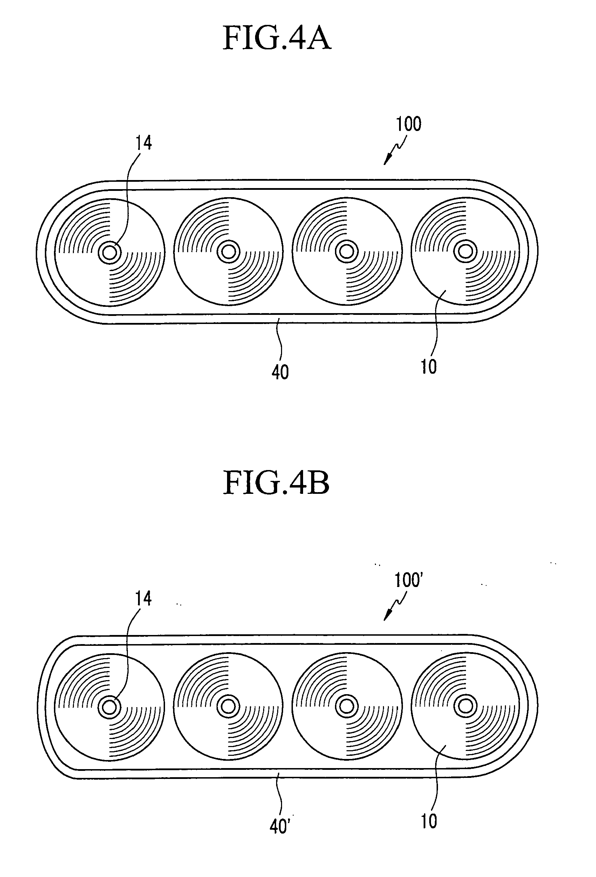

FIG. 3 is an exploded perspective view of one of the electrode assemblies, and FIG. 4A is a cross-sectional view taken along the line IV-IV of FIG. 1.

Referring to FIGS. 3 and 4A, the illustrated electrode assembly 10 is formed in a Jelly Roll shape by spiral-winding the negative electrode 11, the positive electrode 12, and an insulator separator interposed therebetween. The resulting structure is cylindrical.

A sector pin 14 is disposed in the center of cylindrical electrode assembly 10 to maintain the cylinder shape of electrode assembly 10 (referring to FIG. 4A).

Each negative electrode 11 and positive electrode 12 is provided with a current collector of thin film metal foil and includes a coated region 11a, 12a where the active material is coated on the current collector and an uncoated region 11 b, 12b where the active material is not coated on the current collector.

The uncoated region 11 b, 12b is disposed in the opposite end side to each coated region 11 a, 12a.

A first lead tab 11c (hereinafter, referred as "negative lead tab") is connected to the uncoated region 11 b of negative electrode 11; a second lead tab 12c (hereinafter, referred as "positive lead tab") is connected to the uncoated region 12b of positive electrode 12.

In the cylindrical electrode assembly 10 in which the negative electrode, the separator 13, and the positive electrode 12 are wound, the negative lead tab 11c protrudes toward one direction (downward) in the exterior surface of electrode assembly 10; the positive lead tab 12c protrudes toward the opposite direction (upward) of negative lead tab 11c from the center of electrode assembly 10 (referring to FIG. 2).

For this purpose, the width (W12) of coated region 12a of the positive electrode 12 is formed to be less (W12<W11) than the width (W11) of coated region 11a of the negative electrode 11. As the number of windings of the electrode assembly 10 is decreased, the width difference (W11-W12) required for maintaining the safety of rechargeable battery 100 may be minimized.

Since a plurality of electrode assemblies 10 are disposed in one can 40, each is formed as a cylinder having smaller volume than the entire volume of can 40. Accordingly, as the number of windings of each electrode assembly 10 is decreased, it is possible to minimize the width difference (W11-W12) of between negative electrode 11 and positive electrode 12 for maintaining the safety of rechargeable battery 100. Consequently, it is thereby possible to prevent a deterioration in the capacity of the rechargeable battery 100.

The safety of rechargeable battery 100 is ensured by preventing the coated region 12a of each positive electrode 12 and the coated region 11a of the corresponding negative electrode 11 from forming a short-circuit with each other.

In this embodiment, the can 40 includes two non-linear portions. Each non-linear portion includes at least one curved portion. The curvature of the curved portion is substantially similar to or substantially the same as that of the outer side of each electrode assembly 10. The curved portion contacts the outer side of an adjacent electrode assembly 10. In this embodiment, each curved side has a curvature that is substantially the same as or substantially similar to the other, as shown in FIG. 4A. In a rechargeable battery 100' according to a modification of the first embodiment, the two curvatures may be different, for example, as shown in FIG. 4B. Alternatively, only one curved portion may be present.

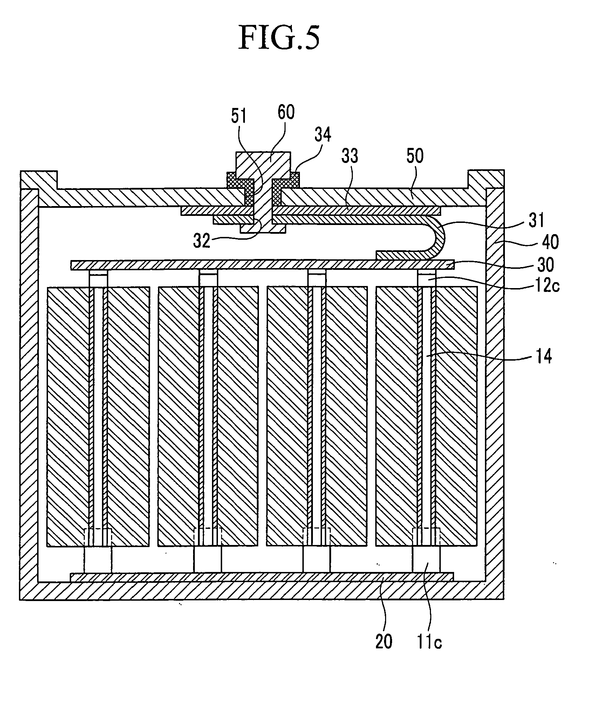

FIG. 5 is a cross-sectional view taken along the line V-V of FIG. 1.

Referring to FIG. 5, in each electrode assembly 10, the negative lead tabs 11c protrude toward the bottom of electrode assembly 10 and are welded and connected to a lower current collecting plate 20 disposed under the electrode assemblies 10.

The positive lead tabs 12c protrude toward the upside of the electrode assemblies 10 and are welded and connected to an upper current collecting plate 30 disposed above the electrode assemblies 10.

In other words, electrode assemblies 10 are connected in parallel by the lower current collecting plate 20 and the upper current collecting plate 30, so as to accomplish a high-capacity.

As shown in the first embodiment, the can 40 may be provided in a modified prismatic shape such that one side is open in order to insert and accommodate a plurality of electrode assemblies 10.

The corner part of the prismatic shape is modified into the curved surface corresponding to the exterior shape of electrode assemblies 10.

As the can 40 has space capable of accommodating a plurality of low-capacity cylindrical electrode assemblies 10, it is able to form part of a high-capacity rechargeable battery 100. Accordingly, when a plurality of such rechargeable batteries 100 are connected, it is possible to decrease the number of parts or circuit devices and to prevent the cell swelling.

In the first embodiment, the can 40 has curved surfaces at both ends of the row electrode assemblies 10. Thus it more effectively contacts the exterior shape of outermost electrode assemblies 10 and it effectively prevents the shaking of electrode assemblies 10 within the can.

The can 40 is welded to the lower current collecting plate 20. The negative lead tab 11c is connected to the lower current collecting plate 20. The can 40 connected to the lower current collecting plate 20 therefore serves as a negative terminal in the rechargeable battery 100. If the positive lead tab is instead connected to the lower current collecting plate in the electrode assembly, the can serves as a positive terminal in the rechargeable battery (not shown).

When the can 40 is connected to the negative electrode 11 of electrode assemblies 10 and serves as a negative terminal, it may be formed of iron. When the can is connected to the positive electrode of electrode assemblies and serves as a positive terminal, it may be formed of aluminum having superior conductivity to iron (not shown). Other metals may be used to form the can, according to requirements.

The cap plate 50 is bound to the opening of can where the electrode assemblies 10 are inserted and seals so as to accommodate the electrode assemblies 10 and an electrolyte solution.

The electrode terminal 60 is mounted in the cap plate 50 in order to connect the positive electrode 12 of electrode assembly 10 inside the can 40.

The electrode terminal 60 is connected to the upper current collecting plate 30 through a connecting member 31.

In this embodiment, the connection member 31 is welded and connected to the upper current collecting plate 30 in one end, and the other end thereof is electrically connected to the electrode terminal 60 and includes a connecting opening 32. In other words, the electrode terminal 60 is electrically connected to the positive electrodes 12 of the electrode assemblies 10 through the connection member 31 and the upper current collecting plate 30. In addition, the cap plate 50 is electrically connected to the negative electrodes 11 of electrode assemblies 10 through the can 40.

A lower insulator 33 is interposed between the cap plate 50 and the connecting member 31 to electrically insulate between the connecting member 31 and the cap plate 50.

An upper insulator 34 is interposed between the upper surface of cap plate 50 and the electrode terminal 60 and between an electrode terminal opening 51 of the cap plate 50 and the electrode terminal 60 to electrically insulate the cap plate 50 and the electrode terminal 60 and to electrically insulate the electrode terminal opening 51 and the electrode terminal 60.

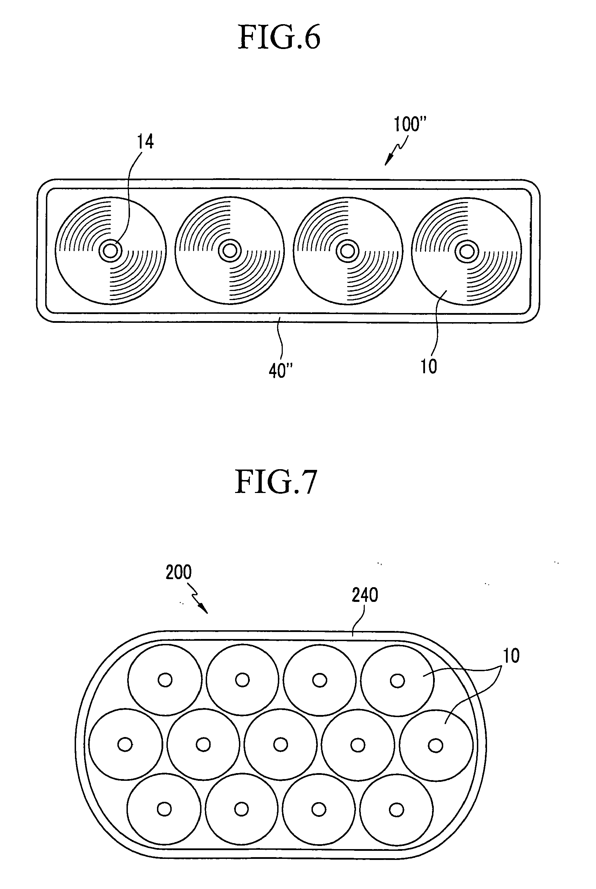

FIG. 6 is a cross-sectional view of a rechargeable battery 100" according to another modification of the first embodiment.

Referring to the rechargeable battery 100" shown in FIG. 6, can 40" is provided in a cuboid prismatic shape such that one side is open in order to insert and accommodate a plurality of electrode assemblies 10. In this embodiment, the curved portions are replaced by flat sides. The other elements are similar to those of the first embodiment.

FIG. 7 is a cross-sectional view of a rechargeable battery according to a second embodiment of the invention.

Referring to FIG. 7, the rechargeable battery 200 according to the second embodiment is formed in a structure wherein electrode assemblies 10 are arranged in an array.

The rechargeable battery 100 according to the first embodiment is provided with electrode assemblies 10 in one row, and the can 40 correspond in shape to the row. In comparison, in the rechargeable battery 200 according to the second embodiment, three rows of electrode assemblies 10 are provided, and the can 240 is formed to have a structure corresponding to a plurality of rows of electrode assemblies 10.

The rechargeable battery 200 according to the second embodiment thus shows a different disposition of electrode assemblies 10 in the can 240 and accommodates more electrode assemblies 10 compared to the rechargeable battery 100 according to the first embodiment. Accordingly, the circuit devices and parts connecting to rechargeable batteries 200 from the outside may be decreased in comparison with the first embodiment.

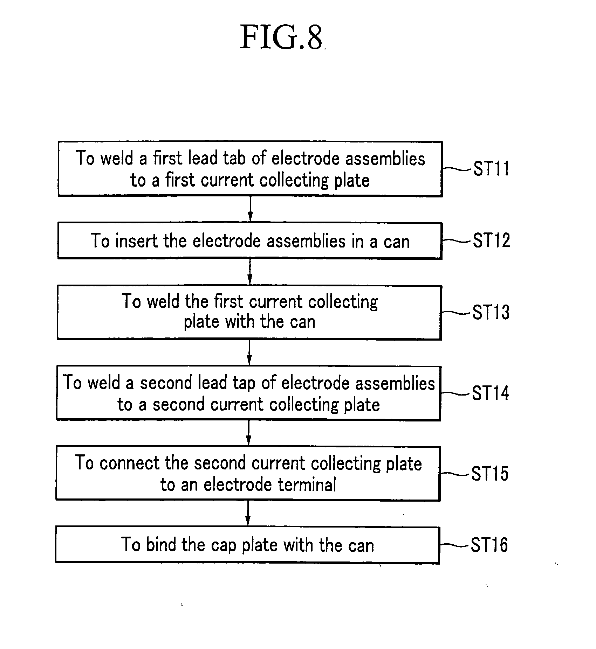

FIG. 8 is a flow chart showing a manufacturing process of a rechargeable battery according to the invention. For convenience, a method of manufacturing the rechargeable battery 100 according to the first embodiment is described.

Referring to FIG. 8, the method of manufacturing a rechargeable battery 100 includes a first step (ST11) to a sixth step (ST16).

The first step (ST11) is to weld each first lead tab 11c (negative lead tab) of the electrode assemblies 10 to the first current collecting plate 20 (lower current collecting plate).

The second step (ST12) is to insert the electrode assemblies 10 in the can 40 whilst welding the lower current collecting plate 20 to the negative lead tab 11c.

The third step (ST13) is to weld and electrically connect the inserted lower current collecting plate 20 of electrode assemblies 10 with the can 40.

The second and third steps (ST12 and ST13) are to electrically connect the negative lead tabs 11c of electrode assemblies 10 to the can 40 whilst interposing the lower current collecting plate 20.

The fourth step (ST14) is to weld the second lead tabs 12c (positive lead tab) of the electrode assemblies 10 to the second current collecting plate 30 (upper current collecting plate) whilst they are inserted in the can 40.

The fifth step (ST5) is to connect the upper current collecting plate 30 to the electrode terminal 60 of cap plate 50 using the connection member 31. In other words, one end of connection member 31 is welded to the upper current collecting plate 30 and rivets a connecting opening 32 of connection member 31 to the electrode terminal 60.

The fourth and fifth step (ST14 and ST15) electrically connect positive lead tabs 12c of the electrode assemblies 10 to the electrode terminal 60 whilst interposing the connection member 31 and the upper current collecting plate 30.

The sixth step (ST16) is to bind the cap plate 50 with the can 40 and to accommodate the electrode assemblies 10 in the can 40 and to seal the same.

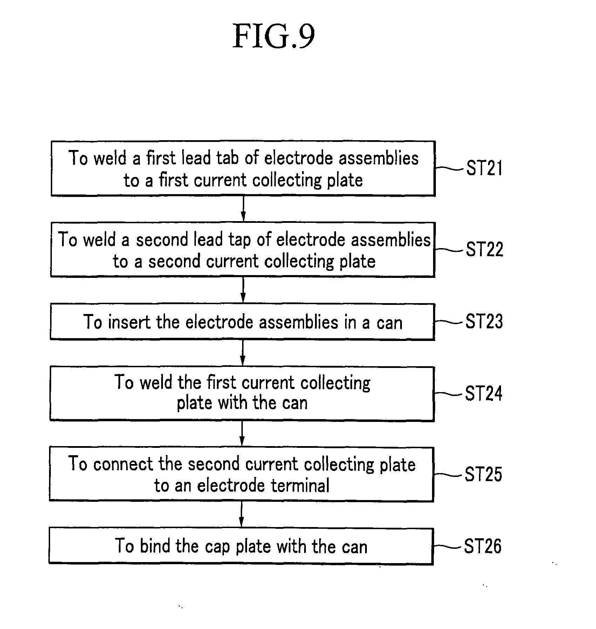

FIG. 9 is a flow chart showing a further manufacturing process of a rechargeable battery in accordance with the invention.

The first manufacturing method described above involves the insertion of the electrode assembly 10 in which the lower current collecting plate 20 is connected to the negative lead tab 11c in the can 40 and the connection of the positive lead tab 12c of electrode assembly 10 to the upper current collecting plate 30.

Conversely in this second manufacturing method the lower current collecting plate 20 is connected to negative lead tab 11c and the electrode assembly, in which the upper current collecting plate 30 is connected to the positive lead tabs 12c is inserted into the can 40.

Referring to FIG. 9, in this manufacturing method, the first step (ST21) is to weld each first lead tab 11c (negative lead tab) of the electrode assemblies 10 to the first current collecting plate 20 (lower current collecting plate). The first step (ST21) thereby electrically connects the negative lead tabs 11 c of the electrode assemblies 10 to the can 40 whilst interposing the lower current collecting plate 20.

The second step (ST22) is to weld each second lead tab 12c (positive lead tab) of the electrode assemblies 10 to the second current collecting plate 30 (upper current collecting plate). The second step (ST22) thereby electrically connects the positive lead tab 12c of the electrode assemblies 10 to the electrode terminal 60 whilst interposing the connection member 31 and the upper current collecting plate 30.

The third step (ST23) is to weld the negative lead tab 11 c with the lower current collecting plate 20 and to insert the electrode assemblies 10 in the can 40 whilst welding the positive lead tab 12c with the upper current collecting plate 30.

The fourth step (ST24) is to weld the lower current collecting plate 20 to the can 40.

The fifth step (ST25) is to connect the upper current collecting plate 30 to an electrode terminal 60 of cap plate 50 using a connecting member 31.

The sixth step (ST26) is to bind the cap plate 50 to the can 240, to accommodate the electrode assembly 10 in a can 40, and to seal the same.

## Claims

1. A rechargeable battery comprising:
a plurality of electrode assemblies [10] electrically connected in parallel, the plurality of electrode assemblies [10] forming an electrode assembly array comprising one or more rows of electrode assemblies [10]; and
a can [40] that houses the electrode assembly array and an electrolyte solution;
wherein the plurality of electrode assemblies are electrically connected via a first current collection plate [20] located at one end of the plurality of electrode assemblies, the rechargeable battery comprising a cap plate [50] bound to an opening of the can [40] sealed to accommodate the electrode assemblies [10] and electrolyte solution,
wherein the plurality of electrode assemblies are electrically connected via a second current collection plate [30] located at the other end of the plurality of electrode assemblies, the can [40] accommodating the first current collection plate [20] at a first end of the can [40] and accommodating the second current collection plate [30] at a second end of the can [40],
wherein the first current collection plate [20] is electrically connected to the first end of the can [40], and the second current collection plate [30] is electrically connected to a terminal [60] located adjacent the second end of the can [40],
and wherein cap plate [50] closes the second end of the can [40] and the terminal [60] is connected to the second current collection plate [30] via a connection member [31] and the connection member [31] supports the second current collection plate [30] in the can.

2. A rechargeable battery according to Claim 1, wherein the connection member [31] comprises two parallel support portions, one support portion being attached to the second current collection plate [30] and the other support portion being connected directly or indirectly to the can.

3. A rechargeable battery according to Claim 2, wherein the two support portions are connected to each other via a bent portion.

4. A rechargeable battery according to any preceding claim, wherein the plurality of electrode assemblies [10] in the electrode assembly array defines an outer circumference of the electrode assembly array, and wherein a portion of the inner surface of the can [40] that is located adjacent the outer circumference of the electrode assembly array at least partially conforms to the shape of the outer circumference of the electrode assembly.

5. A rechargeable battery according to Claim 4, wherein a portion of an inner surface of the can [40] that is located adjacent an outer surface of an electrode assembly [10] is curved.

6. A rechargeable battery according to Claim 5, wherein said portion of the inner surface of the can [40] that is located adjacent an outer surface of an electrode assembly [10] is curved with a same curvature as a curvature of the outer surface of said adjacent electrode assembly [10].

7. A rechargeable battery according to any of Claims 4 to 6, wherein said portion of the inner surface of the can [40] that is located adjacent an outer surface of an electrode assembly [10] conforms to a shape of the outer surface of said adjacent electrode assembly [10].

8. A rechargeable battery according to any preceding claim, wherein the plurality of electrode assemblies [10] are cylindrical.

## Patentansprüche

1. Wiederaufladbare Batterie umfassend:
eine Vielzahl von Elektrodenanordnungen [10], die elektrisch parallel geschaltet sind, wobei die Vielzahl von Elektrodenanordnungen [10] eine Elektrodenanordnungsabfolge bildet, umfassend eine oder mehrere Reihen von Elektrodenanordnungen [10]; und
eine Dose [40], welche die Elektrodenanordnungsabfolge und eine Elektrolytlösung enthält; wobei die Vielzahl von Elektrodenanordnungen elektrisch über eine erste Stromaufnahmeplatte [20] an einem Ende der Vielzahl von Elektrodenanordnungen angeschlossen ist, und die wiederaufladbare Batterie eine Abdeckplatte [50] umfasst, die an eine Öffnung der Dose [40] gebunden und abgedichtet ist, um die Elektrodenanordnungen [10] und Elektrolytlösung aufzunehmen,
wobei die Vielzahl von Elektrodenanordnungen elektrisch über eine zweite Stromaufnahmeplatte [30] verbunden sind, die sich am anderen Ende der Vielzahl von Elektrodenanordnungen befindet, und die Dose [40] die erste Stromaufnahmeplatte [20] am ersten Ende der Dose [40] und die zweite Stromaufnahmeplatte [30] am zweiten Ende der Dose [40] enthält,
wobei die erste Stromaufnahmeplatte [20] elektrisch mit dem ersten Ende der Dose [40] verbunden ist, und die zweite Stromaufnahmeplatte [30] elektrisch mit einem Anschluss [60] verbunden ist, der sich benachbart zu dem zweiten Ende der Dose [40] befindet,
und wobei die Abdeckplatte [50] das zweite Ende der Dose [40] abschließt und der Anschluss [60] mit der zweiten Stromaufnahmeplatte [30] über ein Verbindungselement [31] verbunden ist, und das Verbindungselement [31] die zweite Stromaufnahmeplatte [30] in der Dose trägt.

2. Wiederaufladbare Batterie nach Anspruch 1, wobei das Verbindungselement [31] zwei parallele Trägerteile umfasst, wobei ein Trägerteil mit der zweiten Stromaufnahmeplatte [30] verbunden ist, und der andere Trägerteil direkt oder indirekt mit der Dose verbunden ist.

3. Wiederaufladbare Batterie nach Anspruch 2, wobei die beiden Trägerteile über einen gebogenen Anteil miteinander verbunden sind.

4. Wiederaufladbare Batterie nach einem der vorhergehenden Ansprüche, wobei die Vielzahl von Elektrodenanordnungen [10] in der Elektrodenanordnungsabfolge einen äußeren Umfang der Elektrodenanordnungsabfolge definiert, und wobei ein Teil der Innenfläche der Dose [40], der sich benachbart zu dem äußeren Umfang der Elektrodenanordnungsabfolge befindet, zumindest teilweise der Form des äußeren Umfangs der Elektrodenanordnung entspricht.

5. Wiederaufladbare Batterie nach Anspruch 4, wobei ein Teil einer Innenfläche der Dose [40], der sich benachbart zu einer Außenfläche einer Elektrodenanordnung [10] befindet, gebogen ist.

6. Wiederaufladbare Batterie nach Anspruch 5, wobei der Teil der Innenfläche der Dose [40], der sich benachbart zu einer Außenfläche einer Elektrodenanordnung [10] befindet, mit derselben Biegung gebogen ist, wie die Biegung der Außenfläche der benachbarten Elektrodenanordnung [10].

7. Wiederaufladbare Batterie nach einem der Ansprüche 4 bis 6, wobei der Teil der Innenfläche der Dose [40], der sich benachbart zu einer Außenfläche einer Elektrodenanordnung [10] befindet, der Form der Außenfläche der benachbarten Elektrodenanordnung [10] entspricht.

8. Wiederaufladbare Batterie nach einem der vorhergehenden Ansprüche, wobei die Vielzahl von Elektrodenanordnungen [10] zylindrisch geformt ist.

## Revendications

1. Batterie rechargeable, comprenant :
une pluralité d'ensembles d'électrodes (10) électriquement connectés en parallèle, la pluralité d'ensembles d'électrodes (10) formant un groupement d'ensembles d'électrodes comprenant une ou plusieurs rangées d'ensembles d'électrodes (10) ; et
une boîte (40) qui renferme le groupement d'ensembles d'électrodes et une solution d'électrolyte ;
dans laquelle la pluralité d'ensembles d'électrodes sont électriquement connectés par l'intermédiaire d'une première plaque de collecte de courant (20) disposée à une extrémité de la pluralité d'ensembles d'électrodes, la batterie rechargeable comprenant une plaque de capuchon (50) fixée à une ouverture de la boîte (40), scellée de façon à recevoir les ensembles d'électrodes (10) et la solution d'électrolyte,
dans laquelle la pluralité d'ensembles d'électrodes sont électriquement connectés par l'intermédiaire d'une deuxième plaque de collecte de courant (30) disposée à l'autre extrémité de la pluralité d'ensembles d'électrodes, la boîte (40) recevant la première plaque de collecte de courant (20) à une première extrémité de la boîte (40), et recevant la deuxième plaque de collecte de courant (30) à une deuxième extrémité de la boîte (40),
dans laquelle la première plaque de collecte de courant (20) est électriquement connectée à la première extrémité de la boîte (40), et la deuxième plaque de collecte de courant (30) est électriquement connectée à une borne (60) disposée de façon adjacente à la deuxième extrémité de la boîte (40),
et dans laquelle la plaque de capuchon (50) ferme la deuxième extrémité de la boîte (40) et la borne (60) est connectée à la deuxième plaque de collecte de courant (30) par l'intermédiaire d'un élément de connexion (31), et l'élément de connexion (31) supporte la deuxième plaque de collecte de courant (30) dans la boîte.

2. Batterie rechargeable selon la revendication 1, dans laquelle l'élément de connexion (31) comprend deux parties de support parallèles, une partie de support étant fixée à la deuxième plaque de collecte de courant (30) et l'autre partie de support étant connectée directement ou indirectement à la boîte.

3. Batterie rechargeable selon la revendication 2, dans laquelle les deux parties de support sont connectées l'une à l'autre par l'intermédiaire d'une partie incurvée.

4. Batterie rechargeable selon l'une quelconque des revendications précédentes, dans laquelle la pluralité d'ensembles d'électrodes (10) dans le groupement d'ensembles d'électrodes définit une circonférence extérieure du groupement d'ensembles d'électrodes, et dans laquelle une partie de la surface intérieure de la boîte (40) qui est disposée de façon adjacente à la circonférence extérieure du groupement d'ensembles d'électrodes se conforme au moins partiellement à la forme de la circonférence extérieure de l'ensemble d'électrodes.

5. Batterie rechargeable selon la revendication 4, dans laquelle une partie d'une surface intérieure de la boîte (40) qui est disposée de façon adjacente à une surface extérieure d'un ensemble d'électrodes (10) est incurvée.

6. Batterie rechargeable selon la revendication 5, dans laquelle ladite partie de la surface intérieure de la boîte (40) qui est disposée de façon adjacente à une surface extérieure d'un ensemble d'électrodes (10) est incurvée avec une courbure identique à une courbure de la surface extérieure dudit ensemble d'électrodes adjacent (10).

7. Batterie rechargeable selon l'une quelconque des revendications 4 à 6, dans laquelle ladite partie de la surface intérieure de la boîte (40) qui est disposée de façon adjacente à une surface extérieure d'un ensemble d'électrodes (10) se conforme à une forme de la surface extérieure dudit ensemble d'électrodes adjacent (10).

8. Batterie rechargeable selon l'une quelconque des revendications précédentes, dans laquelle la pluralité d'ensembles d'électrodes (10) sont cylindriques.
